# EUROPÄISCHE PATENTANMELDUNG

(11) **EP 2 803 475 A1**
(43) Veröffentlichungstag der Anmeldung: **19.11.2014**
(21) Anmeldenummer: 13168171.0
(22) Anmeldetag: 17.05.2013
(51) Int. Cl.: B29C 70/38, B29C 70/54, B29B 11/16

(54) **Verfahren und Vorrichtung zur Herstellung eines Faservorformlings für ein Faserverbundbauteil**

(71) Anmelder: Joachim Keim GmbH, 75446 Wiernsheim-Pinache (DE)
(72) Erfinder: Keim, Joachim, 75446 Wiernsheim (DE)
(74) Vertreter: Kohler Schmid Möbus

(57) **Zusammenfassung**

Verfahren und Vorrichtung (20) zur Herstellung eines Vorformlings (12) aus Fasermaterial. Der Vorformling (12) kann mit Harz zu einem Faserverbundbauteil verfestigt werden. Der Vorformling (12) umfasst zumindest einen Roving (14) aus Fasermaterial. Der Roving (14) wird zur Herstellung des Vorformlings (12) auf ein Trägermaterial (16) geklebt. Das Trägermaterial (16) kann in Form einer Trägermatte oder eines Formwerkzeuges ausgebildet sein. Vorzugsweise wird Haftklebstoff zum Aufkleben des Rovings eingesetzt. Das Aufkleben erfolgt bei Zimmertemperatur. Hierdurch kann der Roving (14) sehr schnell auf dem Trägermaterial (16) platziert werden. Produktionszeit und Produktionskosten können somit wesentlich verringert werden.

## Beschreibung

Die Erfindung betrifft ein Verfahren und eine Vorrichtung zur Rovingablage für die Herstellung eines Faserverbundbauteils.

Mit Fasern verstärkte Verbundwerkstoffe sind bis zu 80 % leichter als Stahl und ungefähr halb so schwer wie Aluminium. Faserverbundbauteile werden dabei aus Faservorformlingen, bzw. Preformlingen hergestellt, die zusammen mit einem Harz zu fertigen Faserverbundbauteilen verfestigt werden. Der Faservorformling (Halbzeug) kann dabei mit dem Harz verpresst werden. Alternativ dazu kann Harz in ein Formwerkzeug mit einem Faservorformling injiziert werden, um den Faservorformling zum fertigen Faserverbundbauteil zu verfestigen.

Ihre überragenden mechanischen und thermischen Eigenschaften ermöglichen es, traditionelle Konstruktionswerkstoffe auch in solchen Anwendungen zu substituieren, die nicht primär auf den Leichtbau abzielen. Erste intelligente Prozesse für die industrielle Fertigung in großen Stückzahlen zeigen heute schon mögliche zukünftige Prozessrouten auf. Faserverbundbauteile gewinnen in der Luft- und Raumfahrtindustrie schon seit längerer Zeit immer mehr an Bedeutung und halten darüber hinaus auch immer mehr in anderen Bereichen Einzug.

Bei der Herstellung der Faserhalbzeuge kommen vielfältige textiltechnische Prozesse zur Anwendung. Faserverbundwerkstoffe (FVW), vor allem carbonfaserverstärkte Kunststoffe (CFK), zeichnen sich im Vergleich zu anderen Werkstoffen durch sehr hohe gewichtsspezifische Festigkeit und Steifigkeit, sowie durch sehr gute Ermüdungseigenschaften aus. Zudem bieten Faserverbundwerkstoffe durch ihre Anisotropie die Möglichkeit, die Faserorientierungen im Werkstück jeweils so zu wählen, dass sie möglichst optimal den Belastungen angepasst sind. So lassen sich z. B. die Festigkeiten oder Steifigkeiten bezüglich verschiedener Freiheitsgrade unterschiedlich einstellen (Beispiel: Achse, die torsionsweich, aber biegesteif ist oder Holmgurte, die eine wesentlich größere Festigkeit in Längs- als in Querrichtung haben).

Ein Hauptnachteil, der zur Zeit noch in einigen Bereichen der Luft- und Raumfahrt und im Automobilbau dem Einsatz von Faserverbundwerkstoffen entgegensteht, besteht in den hohen Kosten. Diese entstehen zum einen durch den hohen Materialpreis der Fasern (aufwändiges Herstellungsverfahren), zum anderen durch den bei gewöhnlicher Fertigung großen Anteil an Handarbeit, beispielsweise beim Handlaminieren von Bauteilen.

Vor allem im Automobilbau, wo Großserienfertigung die Regel ist, verhindern die langen Taktzeiten durch das Handlaminieren und die langen Aushärtezyklen im Autoklaven noch die breite Einführung von Faserverbundwerkstoffen.

Aus der US 2003/0121989 A1 ist es bekannt geworden, Fasern zu zerhacken und zusammen mit einem Harz in die gewünschte Form zu spritzen. Durch das Zerhacken der Fasern wird jedoch auf einen Teil der maximal erreichbaren Festigkeit des entstehenden Faserverbundbauteils verzichtet.

Weiterhin offenbart die DE 10 2007 017 446 A1 ein Verfahren zur Lochverstärkung durch Aufnähen von Fasern auf ein Gewebe in einer Ebene. Das Aufnähen von Fasern ist jedoch verhältnismäßig aufwändig und zeitintensiv. Weiterhin können die Stiche beim Vernähen der Fasern eine Schädigung des Gewebes hervorrufen.

Ferner ist aus der DE 10 2010 023 044 A1 ein Verfahren und eine Legevorrichtung zum Herstellen eines Faservorformlings bekannt geworden. Dabei wird ein Roving, d.h. ein Faserbündel, auf ein Trägermaterial aufgelegt und durch ein thermoplastisches Bindematerial an dem Trägermaterial befestigt. Das thermoplastische Bindematerial wird durch induktives Aufheizen des Rovings erhitzt. Das Erhitzen und Abkühlen des Bindematerials kann jedoch ebenfalls verhältnismäßig aufwändig und mit einem gewissen Zeitverlust verbunden sein.

In dem Fachartikel "Das schwarze Gold des Leichtbaus, Kohlenstofffaserverstärkte Kunststoffe", Carl Hanser Verlag, München 2006, Seite 76 ff, wird beschrieben, dass die Entwicklung von Strukturbauteilen mit Lang- und Endlosfaserverstärkung noch am Anfang steht. Zwar sind verschiedenste Verfahrenstechniken, wie beispielsweise Spritzgießen und Verstärkungen unter Verwendung von Kohlenstoff-Nähfäden, bereits bekannt, jedoch steht die Entwicklung eines Verfahrens zur industriellen Produktion dieser Bauteile weiter aus.

Der Erfindung liegt daher die Aufgabe zugrunde, ein Verfahren und eine Vorrichtung zur Herstellung eines Faservorformlings für ein Faserverbundbauteil bereitzustellen, wobei Verfahren und Vorrichtung eine kostengünstigere und weniger zeitaufwändige Herstellung des Faservorformlings ermöglichen sollen.

Diese Aufgabe wird erfindungsgemäß durch ein Verfahren zur Rovingablage für die Herstellung eines Faserverbundbauteils mit folgenden Verfahrensschritten gelöst:
a) Bereitstellen eines flächigen Trägermaterials;
d) Ablegen zumindest eines Rovings auf dem Trägermaterial, wobei der Roving bei Raumtemperatur durch einen Klebstoff auf dem Trägermaterial fixiert wird.

Der Verfahrensschritt d) wird nach dem Verfahrensschritt a) durchgeführt.

Das flächige Trägermaterial, das eben oder dreidimensional ausgebildet sein kann, wird durch das erfindungsgemäße Verfahren zumindest teilweise durch zumindest einen Roving belegt. Der Roving besteht aus einem Faserbündel. Das Faserbündel kann Carbonfasern, Glasfasern, Naturfasern, Keramikfasern und/oder andere Fasern umfassen. Vorzugsweise werden bei dem erfindungsgemäßen Verfahren Carbonfasern eingesetzt.

Mehrere Rovings können zu einem Rovinggelege verbunden sein. Die erläuterten Verfahrensschritte beziehen sich jeweils sowohl auf einen einzelnen Roving als auch auf mehrere Rovings.

Der Roving wird vorzugsweise in Kraftflussrichtung verlegt. Die Kraftflussrichtung des später entstehenden Faserverbundbauteils kann dabei mit Hilfe eines Computer Aided Design (CAD) Verfahrens und/oder durch Zug- bzw. Druckversuche ermittelt werden.

Als Klebstoff kann jedweder Klebstoff eingesetzt werden. Der Klebstoff kann während des Ablegens des Rovings zwischen Roving und Trägermaterial eingebracht werden. Hierzu kann beispielsweise eine Klebstoffdüse vorgesehen sein. Das Kleben bei Raumtemperatur ermöglicht ein schnelles Befestigen des Rovings auf dem Trägermaterial, da keine Abkühlzeit des Klebstoffs beim Aufbringen des Rovings berücksichtigt werden muss. Weiterhin kann auf Heiz- und Kühlvorrichtungen verzichtet werden. Im Gegensatz zu den aus dem Stand der Technik bekannten Verfahren kann somit die zum Aufbringen des Rovings auf das Trägermaterial benötigte Zeit stark verkürzt werden.

Zumindest ein Roving kann im Verfahrensschritt d) in mehreren Lagen übereinander und/oder nebeneinander auf das Trägermaterial abgelegt und durch Klebstoff fixiert werden. Hierdurch kann der Faservorformling in den beanspruchten Bereichen sehr stabil ausgebildet und in den weniger beanspruchten Bereichen dünn und leicht gehalten werden. Vorzugsweise werden im Verfahrensschritt d) mehrere Rovings in mehreren Lagen übereinander und/oder nebeneinander auf dem Trägermaterial abgelegt und durch Klebstoff fixiert.

Der Roving wird vorzugsweise dreidimensional auf dem Trägermaterial abgelegt. Der Roving wird dabei einer Raumkurve folgend auf dem Trägermaterial abgelegt, um die später an dem Faserverbundbauteil angreifenden Kräfte optimal aufnehmen zu können. Der Roving kann sowohl konkav als auch konvex auf dem Trägermaterial abgelegt werden.

Der Klebstoff kann auf den Roving und/oder das Trägermaterial aufgetragen werden. In bevorzugter Ausgestaltung der Erfindung wird der Klebstoff in einem vor dem Verfahrensschritt d) durchgeführten Verfahrensschritt c) auf das Trägermaterial und/oder den Roving aufgetragen. Das Trägermaterial kann dabei vollständig oder teilweise durch einen Sprühauftrag mit dem Klebstoff beschichtet werden. Ein solcher Sprühauftrag führt zu einer sehr einfachen und prozesssicheren Herstellung des Faservorformlings. Alternativ oder zusätzlich dazu kann der Roving kurz vor Berührung des Trägermaterials zumindest teilweise mit Klebstoff beschichtet werden.

Der Klebstoff kann beim Auftrag auf den Roving und/oder das Trägermaterial erwärmt werden. Beispielsweise kann der Roving und/oder das Trägermaterial vor der Lagefixierung des Rovings auf dem Trägermaterial mit erwärmtem Klebstoff beschichtet werden. Die Verbindung zwischen Roving und Trägermaterial erfolgt jedoch bei Raumtemperatur.

Der Klebstoff kann punktförmig oder linienförmig aufgetragen werden. Vorzugsweise ist der Roving punktförmig oder linienförmig mit Klebstoff beschichtet. Der Roving kann dadurch nur punktuell mit dem Trägermaterial verklebt werden. Im Falle einer nicht vollumfänglichen Klebstoffbeschichtung kann eine bessere Verfestigung des Rovings mit Harz erfolgen. In besonders bevorzugter Ausgestaltung der Erfindung werden pro Quadratmeter Trägermaterial zwischen 10g und 30g Klebstoff, insbesondere 20g Klebstoff, eingesetzt.

Eine besonders gute und schnelle Verbindung des Rovings auf dem Trägermaterial ist dadurch erzielbar, dass der Roving in einem auf den Verfahrensschritt d) folgenden Verfahrensschritt e) auf das Trägermaterial gepresst wird. Vorzugsweise wird der Roving durch eine Walze bzw. Rolle angewalzt. Das Anpressen kann dabei durch eine Anpressvorrichtung erfolgen.

In besonders bevorzugter Ausgestaltung der Erfindung wird Klebstoff in Form eines Haftklebstoffs verwendet. Haftklebstoff ist ein Klebstoff, der nach dem Auftragen hochviskos und dauerklebrig bleibt. Haftklebstoffe finden im Stand der Technik Anwendung als Sprühklebstoff, als Transferklebstoff (trägerfreies doppelseitiges Klebeband auf gewachstem Transferpapier), als Beschichtung von Klebebändern, Selbstklebeetiketten, als Haftkitt (z. B. Blu-Tack^{®}) oder als Klebstoffstreifen an rückstandsfrei abziehbaren Klebezetteln. Haftklebstoff bietet zwar nur eine begrenzte Festigkeit, haftet jedoch ohne Zeitverzögerung auch auf schwer beklebbaren Oberflächen, wie den in Rede stehenden Rovings und dem verwendeten Trägermaterial. Die Rovings müssen lediglich fest genug haften, um beim Verpressen des Vorformlings mit Harz zu einem Faserverbundbauteil nicht zu verrutschen.

Der Haftklebstoff kann auf einer Polyurethanverbindung basieren.

Weiterhin kann der Haftklebstoff in Form eines Acrylatklebers vorliegen. Acrylatkleber basieren auf Acrylpolymerisaten. Diese können ohne jede Modifikation als Haftklebstoff verwendet werden. Sie ergeben bei Raumtemperatur eine verhältnismäßig starke, dauerhafte Adhäsion. Acrylatkleber weisen weiterhin eine besonders gute Alterungs- und UV-Lichtbeständigkeit auf. Da sie von Natur aus polar sind, ergeben sie eine gute Adhäsion auf polaren Substraten wie Rovings aus Glasfasern und Rovings aus Nylonfasern.

Der Haftklebstoff kann weiterhin auf Kautschuk basierend sein. Kautschukbasierte Systeme können entweder aus Synthesekautschuk, wie Styrol-Butadien- Kautschuk (SBR), oder Naturkautschuk hergestellt werden. Kautschukbasierte Haftkleber enthalten Kunstharze zur Erzielung der Klebrigkeit, weil Kautschuk nicht grundsätzlich klebrig ist. Alterungs- und UV-Lichtbeständigkeit kautschukbasierter Klebstoffe sind nicht so gut wie bei den zuvor beschriebenen Acrylaten. Besonders die UV-Lichtbeständigkeit ist wegen der Rohmaterialeigenschaften wesentlich niedriger. Kautschukbasierte Haftkleber besitzen jedoch eine gute Adhäsion auf apolaren Substraten wie auf Rovings aus unbehandelten Polyethylenfasern und/oder Polypropylenfasern.

Vorzugsweise werden mehrere Rovings parallel auf dem Trägermaterial abgelegt und bei Raumtemperatur durch einen Klebstoff auf dem Trägermaterial fixiert. Die zur Herstellung des Faservorformlings benötigte Zeit kann durch die Parallelisierung beim Ablegen der Rovings deutlich verkürzt werden.

Auf das Trägermaterial und/oder den Roving kann zumindest ein Verstärkungselement aufgebracht werden. Das Verstärkungselement kann aus einem beliebigen Material, insbesondere Schaumstoff, ausgebildet sein. Das Verstärkungselement weist jedoch vorzugsweise zumindest einen weiteren Roving auf. Mit anderen Worten kann der Faservorformling in Form eines "Sandwiches" aufgebaut sein. Das Verstärkungselement kann auf beliebige Art und Weise aufgebracht werden. Vorzugsweise wird das Verstärkungselement jedoch mit einem zuvor beschriebenen Klebstoff bei Raumtemperatur aufgeklebt und wunschgemäß lagefixiert.

In besonders bevorzugter Ausgestaltung der Erfindung wird ein Verstärkungselement in Form einer Roving-Spritzmasse eingesetzt. Die Roving-Spritzmasse ist dabei als "Bulk-Material" wesentlich kostengünstiger herzustellen als eine Vielzahl von Roving-Lagen. Die Roving-Spritzmasse kann Fasern, insbesondere von Rovings, umfassen, die zerkleinert und mit einer Schnittlänge von ca. 15 mm bis 50 mm zusammen mit einem Haftmittel gespritzt werden. Vorzugsweise wird der Roving in Rovingfaserstücke mit einer Schnittlänge von 20 mm bis 30 mm geschnitten. Diese Schnittlänge gewährleistet eine gute Handhabbarkeit beim Spritzvorgang.

Zumindest ein Roving kann zur Festigkeitserhöhung auf der gespritzten Masse abgelegt und fixiert werden. Das Fixieren erfolgt dabei vorzugsweise mit einem zuvor beschriebenen Klebstoff bei Raumtemperatur. Der Roving kann definiert in Abhängigkeit von dem herzustellenden Verstärkungselement eingesetzt werden. Die Zahl und Orientierung sowie die Überlappung der Rovings kann in Abhängigkeit von der gewünschten Festigkeit des Gesamtverbundes gewählt werden. Nach dem Aufbringen des Verstärkungselements kann alternativ oder zusätzlich dazu zumindest eine Gewebematte aufgetragen werden, um das Verstärkungselement optimal in dem Faservorformling einzubetten.

Als Trägermaterial kann eine Trägermatte eingesetzt werden. Die Trägermatte kann aus einem beliebigen flächigen Material, beispielsweise einer Folie, einem Vlies oder dergleichen, ausgebildet sein. Die Funktion der Trägermatte besteht darin, den auf ihr aufgeklebten Roving in ein Formwerkzeug transferieren zu können, in dem die Trägermatte mit dem Roving und einem Harz verfestigt wird. Die Stabilität des Faservorformlings beruht dabei primär auf dem Roving.

Die Trägermatte kann in Form einer Gewebematte ausgebildet sein. Die Gewebematte besteht dabei vorzugsweise aus mehreren miteinander verwobenen Rovings. Durch die Verwendung einer solchen Gewebematte kann ein besonders stabiler Faservorformling hergestellt werden.

Besonders stark gefestigte dreidimensional geformte Faserverbundbauteile können dadurch erzielt werden, dass die Trägermatte nach Durchführung des Verfahrensschrittes a) in einem Verfahrensschritt b) verformt wird. Der Roving kann nämlich in diesem Fall auf die bereits verformte Trägermatte aufgelegt und mit dieser verklebt und somit gleichzeitig lagefixiert werden. Um eine faltenfreie und spannungsfreie Verformung der Trägermatte zu ermöglichen, kann die Trägermatte an einer oder mehreren Stellen eingeschnitten werden.

Der auf die Trägermatte fixierte Roving kann später die Belastungen des Faserverbundbauteils gut aufnehmen. Da die Rovings der Trägermatte zur Herstellung des dreidimensionalen Faservorformlings nicht - wie bei einer möglichen Herstellungsweise des Verstärkungselements - zerstückelt werden, kann durch das beschriebene Verfahren ein besonders stabiles Faserverbundbauteil erzielt werden.

Die Trägermatte wird vorzugsweise im Tiefziehverfahren verformt. Dabei kann die Trägermatte in eine Halterung gespannt und durch einen Stempel geformt werden.

Alternativ zum Einsatz einer Trägermatte kann ein Formwerkzeug als Trägermaterial eingesetzt werden. Der Roving kann in diesem Fall direkt in das Formwerkzeug geklebt werden. In dem Formwerkzeug kann der Roving anschließend mit Harz verfestigt werden. Auf eine zusätzliche Trägermatte kann dadurch verzichtet werden. Der Klebstoff ist dabei so gewählt und dosiert, dass sich das Faserverbundbauteil nach der Verfestigung mit dem Harz wieder leicht aus dem Formwerkzeug entnehmen lässt. Zwischen dem Formwerkzeug und dem Roving kann dabei eine Anti-Haft-Schicht aus einem Trennmittel vorgesehen sein, die einerseits eine einfache Entnahme des Faserverbundbauteils aus dem Formwerkzeug und andererseits eine ausreichende Haftung des Klebstoffs auf dem Formwerkzeug ermöglicht.

Die Erfindung betrifft weiterhin ein Verfahren zur Herstellung eines Faserverbundbauteils, bei dem ein zuvor beschriebenes Verfahren zur Rovingablage durchgeführt wird, wobei der dabei hergestellte Faservorformling in einem Formwerkzeug mit Harz verfestigt wird. Hierbei handelt es sich nicht um ein eigenständiges Verfahren, sondern vielmehr um eine Fortführung des zuvor beschriebenen Verfahrens, bei dem der Faservorformling unter Verwendung eines Harzes zu einem fertigen Faserverbundbauteil gefestigt wird. Die Verklebung des Rovings mit dem Trägermaterial (zwei- und/oder dreidimensional) muss dabei nur so stark sein, dass die Lagefixierung des Rovings bis zur Verfestigung zu dem Faserverbundbauteil gesichert ist. Die Verfestigung erfolgt vorzugsweise unter Ablauf einer chemischen Reaktion des Harzes mit einem Härter. Der Faservorformling kann zusammen mit dem Harz und dem Härter in das Formwerkzeug gegeben und verpresst werden. Alternativ oder zusätzlich dazu können Harz und Härter in das Formwerkzeug, in dem sich bereits der Faservorformling befindet, injiziert werden.

Die Erfindung betrifft schließlich eine Vorrichtung zur Herstellung eines Faservorformlings für ein Faserverbundbauteil, mit einer Legeeinrichtung, die einen Rovingspeicher und eine Anpressvorrichtung umfasst, durch die zumindest ein Roving führbar und auf ein Trägermaterial anpressbar ist. Die Legeeinrichtung kann dabei, insbesondere durch einen Roboterarm, in alle Raumrichtungen bewegbar und/oder alle Raumwinkel verschwenkbar sein, um den Roving in einer beliebigen Formkurve auf das Trägermaterial aufzubringen. Die Legeeinrichtung kann der Bauteilkurve bzw. Bauteilkontur auch im Falle konkav oder konvex geformter Faservorformlinge präzise folgen.

In dem Rovingspeicher kann der Roving in Form eines "Endlosrovings" vorgehalten werden. Die Anpressvorrichtung kann derart in Form eines Vorsprungs, beispielsweise in Form eines Führungsstiftes, ausgebildet sein, dass der Roving auf das Trägermaterial aufgedrückt werden kann. Vorzugsweise ist die Anpressvorrichtung in Form einer Walze bzw. Rolle ausgebildet, um ein Schleifen der Anpressvorrichtung auf dem Trägermaterial zu unterbinden.

Die Legeeinrichtung kann weiterhin eine Schneidevorrichtung umfassen, die dazu ausgebildet ist, den Roving zu schneiden, sodass dieser in passender Länge aufgetragen werden kann.

Die Legeeinrichtung kann ferner eine Führungsvorrichtung aufweisen, die in der Lage ist, den Roving der Anpressvorrichtung zuzuführen. Hierdurch kann die Fertigung des Faservorformlings insbesondere dann vereinfacht werden, wenn der Roving durch eine Schneidevorrichtung abgeschnitten und die Ablage des Rovings an einer anderen Position fortgeführt werden soll.

Der Rovingspeicher umfasst vorzugsweise eine Haspel. Der Roving ist in diesem Fall direkt an der Legeeinrichtung von der Haspel abwickelbar. Hierdurch ist eine Ablage des Rovings entlang einer beliebigen Raumkurve, d.h. "frei im Raum" möglich, ohne dass sich der Roving an Störkonturen verwickeln kann.

Die Legeeinrichtung kann weiterhin eine Klebstoff-Beschichtungsvorrichtung, insbesondere eine beheizbare Klebstoff-Beschichtungsvorrichtung, aufweisen. Die Klebstoffbeschichtungsvorrichtung kann in Form einer Klebstoffdüse ausgebildet sein und einen Klebstoffspeicher umfassen, der fluidisch mit der Klebstoffdüse verbunden ist. Hierdurch kann der Roving unmittelbar vor dem Auftragen mit Klebstoff beschichtet werden.

Zur noch schnelleren Fertigung von Faservorformlingen kann die Vorrichtung mehrere Rovingspeicher umfassen und die Anpressvorrichtung zum parallelen Führen und Anpressen mehrerer Rovings ausgebildet sein. Der Rovingspeicher kann hierzu mehrere Haspeln umfassen, auf denen Rovings aufgewickelt sind.

Die Vorrichtung zur Herstellung eines Faservorformlings kann ferner eine Werkzeugwechselvorrichtung umfassen. An der Werkzeugwechselvorrichtung kann ein erstes Werkzeug zum Auftrag von Klebstoff, beispielsweise in Form einer Klebstoffdüse, ein zweites, zuvor bereits beschriebenes Werkzeug zum Auftrag zumindest eines Rovings und ein drittes Werkzeug zum Spritzen einer Mischung aus Rovingfaserstücken und Haftmittel montierbar sein. Das dritte Werkzeug kann zur Herstellung eines Verstärkungselements eingesetzt werden.

Weitere Merkmale und Vorteile der Erfindung ergeben sich aus der nachfolgenden detaillierten Beschreibung zweier Ausführungsbeispiele der Erfindung, anhand der Figuren der Zeichnung, die erfindungswesentliche Einzelheiten zeigt, sowie aus den Patentansprüchen.

Die in der Zeichnung dargestellten Merkmale sind nicht notwendigerweise maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind zwei Ausführungsbeispiele der Erfindung dargestellt und in der nachfolgenden Beschreibung näher erläutert.

Es zeigen:
- Fig. 1: eine schematische Seitenansicht einer Vorrichtung zur Herstellung eines ersten Faserverbundbauteils;
- Fig. 2a: eine Draufsicht auf ein zweites Faserverbundbauteil;
- Fig. 2b: eine geschnittene Seitenansicht des zweiten Faserverbundbauteils entlang der Linie A-A gemäß Fig. 2a; und
- Fig. 2c: eine Ansicht eines Details aus Fig. 2b.

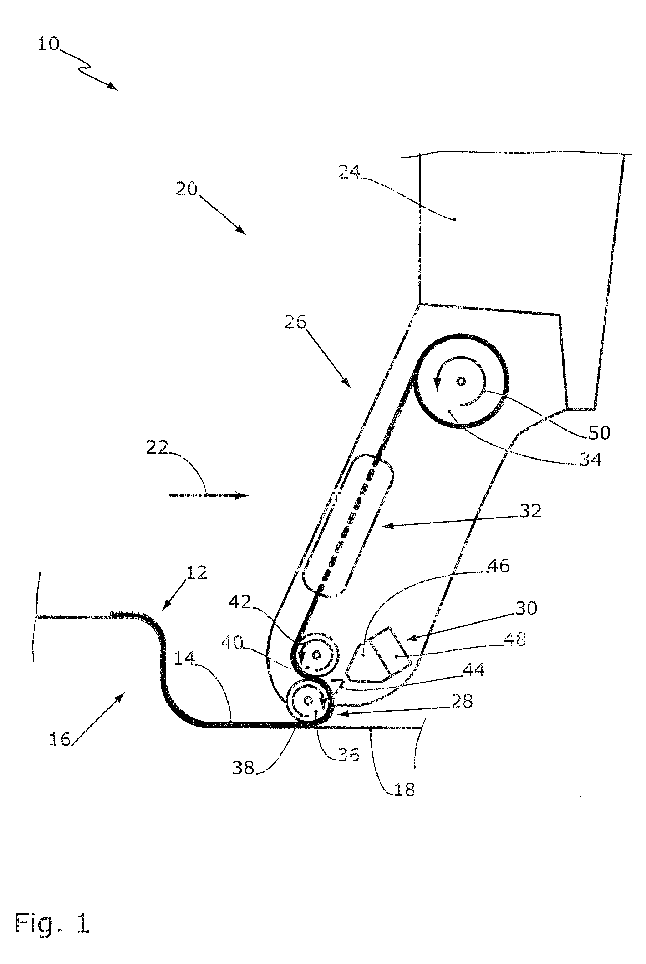

Fig. 1 zeigt eine stark vereinfacht dargestellte erfindungsgemäße Vorrichtung 10 zur Herstellung eines ersten erfindungsgemäßen Faserverbundbauteils. Das erste Faserverbundbauteil ist in Fig. 1 noch nicht fertig gestellt, sondern liegt noch in Form eines Faservorformlings 12 vor.

Der Faservorformling 12 besteht in dem in Fig. 1 dargestellten Verfahrensstadium aus einem Roving 14, der in ein Trägermaterial 16 in Form eines Formwerkzeugs abgelegt ist. Das Trägermaterial 16 umfasst dabei eine aus Metall ausgebildete Formwerkzeugwanne 18, in die der Roving 14 lagefixiert eingebracht wird. Nach der Fertigstellung wird der Faservorformling 14 in der Formwerkzeugwanne 18 zusammen mit Harz und Härter (nicht gezeigt) zu einem Faserverbundbauteil verpresst. Hierzu wird auf die Formwerkzeugwanne 18 ein zu der Formwerkzeugwanne 18 korrespondierender Stempel (nicht gezeigt) gepresst.

Zusätzlich zu dem Trägermaterial 16 umfasst die Vorrichtung 10 zur Herstellung eines Faserverbundbauteils eine Vorrichtung 20 zur Herstellung eines Faservorformlings, hier des Faservorformlings 12. Die Vorrichtung 20 zur Herstellung eines Faservorformlings wird in der Darstellung gemäß Fig. 1 in Richtung eines ersten Pfeils 22 bewegt, um den Roving 14 abzulegen. Die Bewegung wird durch einen Roboterarm 24 ermöglicht, der in der Lage ist, eine Legeeinrichtung 26 in Form eines Auslegers in alle Raumrichtungen und Raumwinkel zu bewegen. Alternativ oder zusätzlich zu dem Roboterarm 24 kann das Trägermaterial 16 verschiebbar und/oder verschwenkbar ausgebildet sein. Der Roving 14 kann dadurch beliebig dreidimensional verlegt werden.

Die Legeeinrichtung 26 weist eine Anpressvorrichtung 28, eine Klebstoff-Beschichtungsvorrichtung 30, eine Führungs- und Schneidevorrichtung 32 und einen Rovingspeicher 34 auf.

Die Anpressvorrichtung 28 umfasst eine erste Rolle 36, die beim Ablegen des Rovings 14 in Richtung eines zweiten Pfeils 38 gedreht wird sowie eine zweite Rolle 40, die beim Ablegen des Rovings 14 in Richtung eines dritten Pfeils 42 gedreht wird. Die dargestellte Anpressvorrichtung 28 ermöglicht durch ihre Rollen 36, 40 eine sichere Führung des Rovings 14.

In der Anpressvorrichtung 28 wird die Unterseite des Rovings 14 mit einem Klebstoff 44 beschichtet. Der Klebstoff 44 ist in Form von Sprühstrahlen in Fig. 1 dargestellt. Der Klebstoff 44 tritt aus einer Klebstoffdüse 46 aus, die fluidisch mit einem Klebstoffspeicher 48 verbunden ist. Klebstoffdüse 46 und Klebstoffspeicher 48 sind Teil der Klebstoff-Beschichtungsvorrichtung 30. Der Roving 14 wird dabei nicht vollumfänglich, sondern lediglich an seiner Unterseite mit Klebstoff 44 beschichtet, um eine gute Verbindung des Rovings 14 mit dem Harz (nicht gezeigt) zur Verfestigung des Faservorformlings 12 zum fertigen Faserverbundbauteil zu ermöglichen.

Bei dem eingesetzten Klebstoff 44 handelt es sich um einen beliebigen Haftkleber, wie beispielsweise einen kautschukbasierten oder polyurethanbasierten Haftkleber. Um den Klebstoff 44 auf den Roving 14 auftragen zu können, sind die Klebstoffdüse 46 und der Klebstoffspeicher 48 beheizt. Das Anpressen des Rovings 14 auf dem Trägermaterial 16 durch die Anpressvorrichtung 28 erfolgt jedoch bei Raumtemperatur. Nach der Beschichtung ist der Roving 14 dauerhaft klebrig. Er haftet dadurch bei Kontakt sofort auf dem Trägermaterial 16. Es wird keine Zeit zum Abbinden des Klebstoffs 44, Erhitzen oder Abkühlen des Klebstoffs 44 auf dem Trägermaterial 16 benötigt. Der Roving 14 kann dadurch sehr schnell auf dem Trägermaterial 16 lagefixiert werden.

Der Roving 14 wird durch einen Rovingspeicher 34 bereitgestellt, der in Form einer Haspel ausgebildet ist. Der Rovingspeicher 34 wird dabei in Richtung eines vierten Pfeils 50 gedreht. Beim Ablegen des Rovings 14 wirkt eine Zugkraft von 0,2N bis 1,0N, insbesondere von 0,30N, auf den Rovingspeicher 34. Eine Zugkraft von 0,30N entspricht dabei einem Zug auf den Rovingspeicher 34 durch ein Gewicht von 30g. Aufgrund der geringen auftretenden Zugkräfte kann der Roving 14 besonders schnell verlegt werden.

Zwischen Rovingspeicher 34 und der Anpressvorrichtung 28 ist die Führungs- und Schneidevorrichtung 32 vorgesehen. Die Führungs- und Schneidevorrichtung 32 weist äußerlich die Form einer Hülse auf, in der der Roving 14 (gestrichelt gezeichnet) geführt wird. Mit der Führungs- und Schneidevorrichtung 32 kann der Roving 14 durchtrennt werden (nicht gezeigt). Das Anfangsstück des durchtrennten Rovings 14 kann anschließend durch die Führungs- und Schneidevorrichtung 32 der Anpressvorrichtung 28 zugeführt werden.

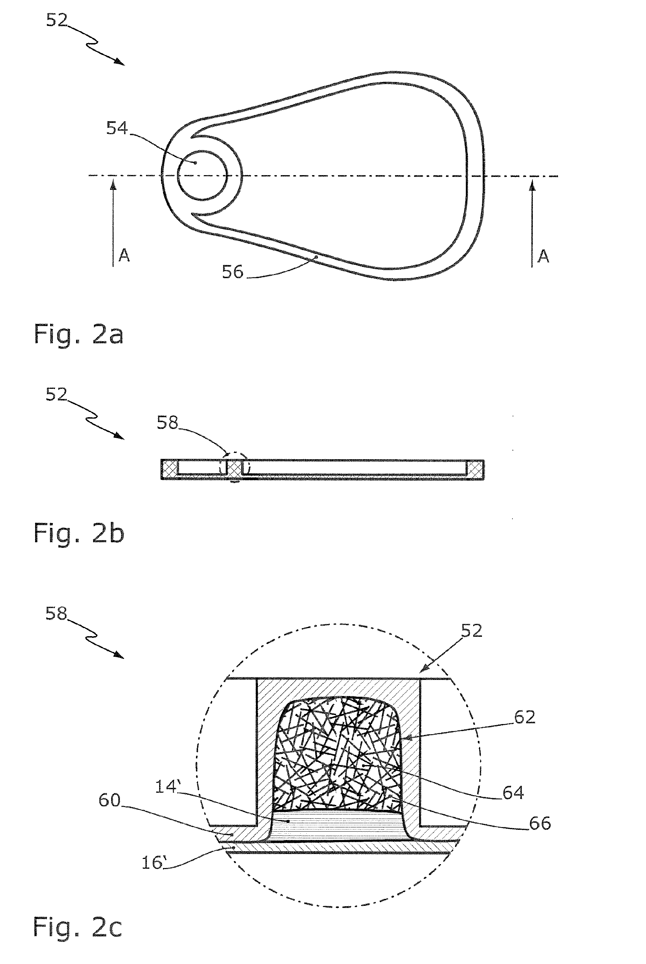

Fig. 2a zeigt eine Draufsicht auf ein erfindungsgemäßes "fertiges", aus einem zweiten Faservorformling produziertes zweites Faserverbundbauteil 52. Das zweite Faserverbundbauteil 52 wurde durch Verpressen eines Harzes mit einem Faservorformling hergestellt. Das zweite Faserverbundbauteil 52 ist im Wesentlichen in Form eines ebenen Paddels ausgebildet und weist eine Durchgangsausnehmung 54 sowie einen umlaufenden Verstärkungssteg 56 auf. Der Verstärkungssteg 56 ist dabei so ausgebildet, dass das zweite Faserverbundbauteil 52 an ihm angreifende Kräfte optimal aufnehmen kann.

Fig. 2b stellt eine entlang der Linie A-A gemäß Fig. 2a geschnittene Seitenansicht des zweiten Faserverbundbauteils 52 dar. Die Schnittfläche ist - im Gegensatz zur Darstellung in Fig. 2c - stark vereinfacht dargestellt.

Fig. 2c zeigt einen Ausschnitt 58 gemäß Fig. 2b in vergrößerter Ansicht. Dabei ist ersichtlich, dass das zweite Faserverbundbauteil 52 ein Trägermaterial 16' in Form einer Trägermatte aufweist. Die Trägermatte ist als eine Gewebematte ausgebildet. Das Trägermaterial 16' besteht aus mehreren - im Detail nicht sichtbaren - Rovings. Auf das Trägermaterial 16' sind mehrere Rovings übereinander fixiert, die in ihrer Gesamtheit mit dem Bezugszeichen 14' versehen sind. Die Rovings 14' wurden dabei mit dem erfindungsgemäßen Verfahren auf das Trägermaterial 16' aufgeklebt. Weiterhin ist auf das Trägermaterial 16' ein Rovinggelege 60 aufgeklebt, das aus mehreren - im Detail nicht sichtbaren - Rovings besteht.

Schließlich ist ein kostengünstig produzierbares Verstärkungselement 62 zwischen den Rovings 14' und dem Rovinggelege 60 vorgesehen. Das Verstärkungselement 62 wurde aus einer Mischung aus einem Haftmittel 64 und Rovingfaserstücken hergestellt, wobei aus Gründen der Übersichtlichkeit lediglich ein erstes Rovingfaserstück 66 mit einem Bezugszeichen versehen ist.

Zusammenfassend betrifft die Erfindung ein Verfahren und eine Vorrichtung zur Herstellung eines Vorformlings aus Fasermaterial. Der Vorformling kann mit Harz zu einem Faserverbundbauteil verfestigt werden. Der Vorformling umfasst zumindest einen Roving aus Fasermaterial. Der Roving wird zur Herstellung des Vorformlings auf ein Trägermaterial geklebt. Das Trägermaterial kann in Form einer Trägermatte oder eines Formwerkzeuges ausgebildet sein. Vorzugsweise wird Haftklebstoff zum Aufkleben des Rovings eingesetzt. Das Aufkleben erfolgt bei Zimmertemperatur. Hierdurch kann der Roving sehr schnell auf dem Trägermaterial platziert werden. Produktionszeit und Produktionskosten können somit wesentlich verringert werden.

## Patentansprüche

1. Verfahren zur Rovingablage für die Herstellung eines Faserverbundbauteils (52) mit den Verfahrensschritten:
a) Bereitstellen eines flächigen Trägermaterials (16, 16');
d) Ablegen zumindest eines Rovings (14, 14') auf dem Trägermaterial (16, 16'), wobei der Roving (14, 14') bei Raumtemperatur durch einen Klebstoff (44) auf dem Trägermaterial (16, 16') fixiert wird.

2. Verfahren nach Anspruch 1, **dadurch gekennzeichnet, dass** in dem Verfahrensschritt d) zumindest ein Roving (14), insbesondere mehrere Rovings (14'), in mehreren Lagen übereinander und/oder nebeneinander auf dem Trägermaterial (16, 16') abgelegt und durch Klebstoff (44) fixiert wird.

3. Verfahren nach Anspruch 1 oder 2, **dadurch gekennzeichnet, dass** der Roving (14, 14') dreidimensional abgelegt wird.

4. Verfahren nach einem der vorhergehenden Ansprüche, **dadurch gekennzeichnet, dass** der Klebstoff (44) vor Durchführung des Verfahrensschrittes d) in einem Verfahrensschritt c) auf das Trägermaterial und/oder den Roving (14, 14') aufgetragen wird.

5. Verfahren nach Anspruch 4, **dadurch gekennzeichnet, dass** der Klebstoff (44) punktförmig oder linienförmig aufgetragen wird.

6. Verfahren nach einem der vorhergehenden Ansprüche, **dadurch gekennzeichnet, dass** der Roving (14, 14') in einem auf den Verfahrensschritt d) folgenden Verfahrensschritt e) auf das Trägermaterial (16, 16') gepresst wird.

7. Verfahren nach einem der vorhergehenden Ansprüche, **dadurch gekennzeichnet, dass** Klebstoff (44) in Form eines Haftklebstoffs verwendet wird.

8. Verfahren nach einem der vorhergehenden Ansprüche, **dadurch gekennzeichnet, dass** mehrere Rovings parallel auf dem Trägermaterial abgelegt und bei Raumtemperatur durch einen Klebstoff auf dem Trägermaterial fixiert werden.

9. Verfahren nach einem der vorhergehenden Ansprüche, **dadurch gekennzeichnet, dass** auf das Trägermaterial und/oder den Roving (14') zumindest ein Verstärkungselement (62), insbesondere in Form einer Roving-Spritzmasse, aufgebracht wird.

10. Verfahren nach einem der vorhergehenden Ansprüche,
**dadurch gekennzeichnet, dass** ein Trägermaterial (16') in Form einer Trägermatte eingesetzt wird.

11. Verfahren nach Anspruch 10, **dadurch gekennzeichnet, dass** die Trägermatte nach Durchführung des Verfahrensschrittes a) in einem Verfahrensschritt b), insbesondere durch ein Tiefziehverfahren, verformt wird.

12. Verfahren nach einem der Ansprüche 1 bis 9, **dadurch gekennzeichnet, dass** ein Trägermaterial (16) in Form eines Formwerkzeugs eingesetzt wird.

13. Verfahren zur Herstellung eines Faserverbundbauteils (52), bei dem ein Verfahren zur Rovingablage nach einem der vorhergehenden Ansprüche durchgeführt wird, wobei der dabei hergestellte Faservorformling (12) in einem Formwerkzeug mit Harz verfestigt wird.

14. Vorrichtung (20) zur Herstellung eines Faservorformlings (12) für ein Faserverbundbauteil (52), mit einer Legeeinrichtung (26), die einen Rovingspeicher (34) und eine Anpressvorrichtung (28) umfasst, durch die zumindest ein Roving (14) führbar und auf ein Trägermaterial (16, 16') anpressbar ist.

15. Vorrichtung nach Anspruch 14, **dadurch gekennzeichnet, dass** die Legeeinrichtung (26) eine, insbesondere beheizbare, Klebstoff-Beschichtungsvorrichtung (30) aufweist.

16. Vorrichtung nach Anspruch 14 oder 15, **dadurch gekennzeichnet, dass** die Vorrichtung mehrere Rovingspeicher umfasst und die Anpressvorrichtung zum parallelen Führen und Anpressen mehrerer Rovings ausgebildet ist.
